# EUROPEAN PATENT SPECIFICATION

(11) **EP 3 965 622 B1**
(45) Date of publication and mention of the grant of the patent: **27.12.2023**
(21) Application number: 20722352.0
(22) Date of filing: 06.05.2020
(51) Int. Cl.: A47J 31/06, A47J 31/46

(54) **AN APPARATUS FOR RELEASING AN INGREDIENT FROM A CAPSULE**
VORRICHTUNG ZUR AUSGABE EINER ZUTAT AUS EINER KAPSEL
APPAREIL DE DISTRIBUTION D'UN INGRÉDIENT À PARTIR D'UNE CAPSULE

(30) Priority: 06.05.2019 EP 19172705
(43) Date of publication of application: 16.03.2022
(73) Proprietor: Koninklijke Philips N.V., 5656 AG Eindhoven (NL)
(72) Inventor: BEEKMAN, Jarno, 5656 AE Eindhoven (NL); OGINK, Judith Margreet Hanneke, 5656 AE Eindhoven (NL); VAN TOOR, Johannes Hendrikus, 5656 AE Eindhoven (NL); FAVERO, Andrea, 5656 AE Eindhoven (NL)
(74) Representative: Vollering, Stefanus Franciscus Maria
(86) International application number: PCT/EP2020/062478
(87) International publication number: WO 2020/225267

(56) References cited:
- EP-A1- 1 247 480
- US-A1- 2013 001 251
- US-A1- 2018 352 995

## Description

### FIELD OF THE INVENTION

The invention relates to an apparatus for releasing an ingredient from a capsule, in particular a coffee capsule for a capsule-based coffee machine. The invention also relates to the capsule-based coffee machine itself.

### BACKGROUND OF THE INVENTION

Capsule-based coffee machines are well known. A capsule-based espresso coffee machine includes a capsule holding assembly for holding a capsule in position. During brewing, water is injected into the capsule by a high pressure pump. A pressure in the capsule is established that leads to the puncturing of the cover against a puncture plate, for example known as a stud plate.

Once the capsule is punctured, the coffee can be released from the capsule through the punctured perforations, and through the stud plate. The beverage is then collected at a coffee outlet.

An espresso coffee beverage combines a liquid part and a crema layer. The crema layer should have a fine and smooth consistency, formed by microbubbles. However, the turbulent jets created by the high pressure process can result in a coarse consistency, with undesirably large bubbles formed in the crema.

In particular, investigations carried out by the applicant have shown that the exit flow from the stud plate can create strong jets and these jets may also include large bubbles caused by turbulence at the output of the stud plate. If these jets lead directly to the coffee outlet, large bubbles can be formed in the crema layer.

One approach which has been proposed (but not yet published) by the applicant is to provide a barrier between the output jets from the stud plate and the coffee flow to the coffee outlet. This avoids a direct path from the stud plate to the coffee outlet.

Document US-A-2013/0001251 discloses an apparatus according to the preamble of independent claim 1.

The applicant has also found that if the jets from the stud plate impact on the crema flow which then leads to the coffee outlet, undesirable large bubbles can still be introduced into the flow, even if there is no direct flow from the stud plate to the coffee outlet. This provides another mechanism by which the crema can have a coarse consistency.

There remains a need for an apparatus for releasing the capsule contents while maintaining a smooth and fine consistency of the delivered capsule ingredient.

### SUMMARY OF THE INVENTION

The invention is defined by the claims.

According to an aspect of the invention, there is provided an apparatus for releasing an ingredient from a capsule, comprising:
a chamber for receiving a capsule, the capsule having a top cover;
a stud plate comprising a set of openings for receiving the capsule contents as pressurized jets after rupture of the top cover;
an outlet for delivery of the capsule contents; and
a jet shaping unit downstream of the stud plate, comprising a set of one or more jet shaping elements, each jet shaping element associated with a respective set of one or more of the openings of the stud plate.

This apparatus releases the capsule contents to create a set of pressurized jets through a ruptured top cover, in conventional manner. However, these jets pass through a jet shaping unit. In particular, some or all of the orifices, and hence jets, are associated with a jet shaping element. The jet shaping elements for example catch or guide the jets and thereby reduce the flow speed of the jets. This prevents high speed jets impinging directly on the general flow to the outlet, and thereby avoids formation of large bubbles in that general flow.

The openings are tapered, having a wide end and a narrow end, wherein the narrow end of the openings are for receiving the capsule contents. A jet is thus created at the narrow end, and is formed at the transition between the ruptured cover and the narrow ends of the openings. Burrs on the stud plate will create a flow having a direction and turbulence which cannot accurately be predicted or controlled. Thus, the jets may not have desired characteristics and may result in a coarse crema when they impact on the flow to the outlet. The jet shaping elements slow the jets before they reach the flow to the outlet.

The apparatus further comprises a deflector positioned between the stud plate and the outlet. This is used to prevent a direct path from the jets to the outlet. The deflector may be a separate plate or it may be an integral part of a collector unit downstream of the chamber.

The jet shaping unit may for example be integrated with the stud plate or with the deflector plate, or again with a collector unit downstream of the chamber. This means the jet shaping unit does not require any additional component to be introduced into the design.

In one example, the jet shaping elements may each comprise a projection which projects towards a respective opening of the stud plate. Thus, the jet flow from the stud plate opening impinges on the projection, which thereby reduces the flow rate.

The openings of the stud plate may for example be conical and the projections have conical ends which project into the tapered openings. In this way, a spacing is defined into which the jet flow is diverted.

In another example, the jet shaping elements may each comprise an orifice of an orifice array, with the orifices aligned with the openings. These orifices may be considered to elongate the design of the stud plate, so that it has openings followed by a cylindrical channel. Any jet flow not directly aligned with the channel will strike the channel wall, so that overall the jet flow loses energy.

The invention also provides a capsule-based espresso coffee machine comprising:
a water reservoir;
a pressurizing system; and
an apparatus as defined above, for releasing the contents of the capsule under pressure, wherein the outlet of the apparatus defines or is coupled to an outlet of the coffee machine.

The release apparatus may thus form part of a capsule-based espresso coffee machine.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows in schematic form a coffee machine which may be adapted to make use of the release apparatus of the invention;
Figure 2 shows the conventional apparatus for releasing the capsule contents in more detail;
Figure 3 shows the appearance of the stud plate viewed from the side which contacts the capsule;
Figure 4 shows a first example of a modification to the apparatus of Figure 2.
Figure 5 shows the design of the jet shaping unit in more detail;
Figure 6 shows a second example of a modification to the apparatus of Figure 2;
Figure 7 shows the design of the jet shaping unit in more detail; and
Figure 8 shows that the jet shaping unit may be formed as an integral unit with the stud plate.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention, which is defined in the claims.

These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides an apparatus for releasing an ingredient from a capsule in which a stud plate comprises a set of openings for receiving the capsule contents as pressurized jets. A jet shaping unit is downstream of the stud plate having a set of one or more jet shaping elements. The or each jet shaping element is associated with a respective set of one or more openings of the stud plate. Thus, generally there is a set of jet shaping elements and a set of openings. The jet shaping elements reduce the jet flow velocity and thereby prevent the jets generating bubbles which could otherwise decrease the smoothness of the delivered capsule contents.

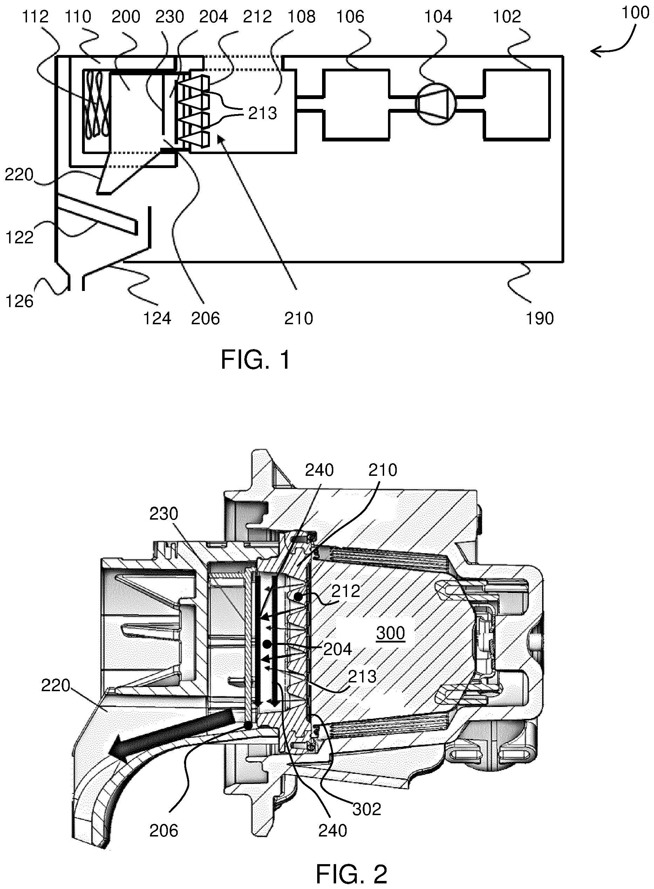

Figure 1 shows one example of a possible design for a coffee machine 100 which may be adapted to make use of the release apparatus of the invention. The coffee machine 100 comprises a housing 190 in which the various functional parts of the coffee machine 100 are provided. The coffee machine 100 comprises a liquid reservoir 102 for holding water or another liquid for preparing the coffee, and a pump 104 for pumping the water to a heater element 106 for heating the water.

The heated water is injected into a brewing chamber 108 and flows into a capsule of ground coffee (not shown) that is inserted in the brewing chamber 108. The capsule may be pierced open by the apparatus on an inlet side of the capsule or the capsule design may include openings so that the capsule does not require piercing. The water injected into the brewing chamber flows into the capsule via these holes or openings. During brewing, the capsule is pressed against a fluid receiving plate also referred to as a stud plate 210, sometimes in the art also referred to as extraction plate, comprising studs 212 and through holes between the studs 212.

The stud plate is arranged on a side which faces, in use, the capsule for opening the capsule under the influence of fluid pressure. More specifically, by virtue of the pressure of the provided hot water which enters into the capsule under pressure, a cover of the capsule, preferably provided in metal such as aluminum, or in plastic, is torn open on so called studs of the stud plate, allowing brewed coffee to flow out of the capsule and through the holes 213 in the stud plate 210. These holes 213 lead to flow channels on the opposite side of the stud plate.

In one particular example, a metal piercer is provided at the back of the capsule, for example with a set of piercing points. This piercer is located into the back of the moving chamber. After the capsule is loaded into the moving chamber, the capsule is pierced when the moving chamber is closed by pushing an actuation lever. It leaves a set (of one or more) distinct holes in the inlet side of the capsule (the smallest end of the cone shaped capsule, opposite the flange).

As mentioned above, an alternative is to have capsules that are already opened at the inlet side.

The capsule cover, which is made of thin aluminium foil (or a plastic foil, or a laminate of different materials), is pressed against the studplate, which has a non-flat surface of the studs 212.

In the particular example of Figure 1, the collector module 200 is slidably provided in a collector housing member 110. Within the collector housing member 110, the collector module 200 is biased towards the brewing chamber 108 by means of a spring 112 as a biasing member, or is slid by any other mechanism.

An opening 206 is provided giving access to a coffee outlet 220 in the form of a first fluid channel, provided as an outlet conduit for guiding brewed coffee away from the collector chamber 204 in a direction away from the stud plate 210. Downstream of the first fluid channel 220, a second fluid channel 122 is provided as a part of a fluid track for providing coffee to a dispensing nozzle 126. The coffee provided by the first fluid channel 220 flows via the slanted second fluid channel 122 in a nozzle collector 124 to which the dispensing nozzle 126 is connected.

Figure 2 shows one example of a conventional apparatus for releasing the capsule contents, in more detail, and with a different outlet arrangement. Figure 2 additionally shows the capsule 300 with its cover 302 mounted against the stud plate 210.

Figure 2 shows more clearly how the studs 212 project towards the capsule on one side of the stud plate. When the hydraulic pressure builds up in the appliance due to the pump running, the foils starts tearing at these studs. The pressure is for example around 8 bars (800kPa), although the required pressure depends on the foil characteristics (such as material type, thickness, hardness, embossing design, weak spots, stud geometry etc.). The result is a number of tears which propagate from the stud tips, and which allow the coffee to flow out towards the set of holes 213 in the studplate and into the spout towards the cup. On the opposite side of the stud plate, the holes 213 lead to the diverging channels shown in Figure 2, and which are deeper than the amount by which the studs 212 project in the opposite direction. Thus, there are shallow studs on one side, and holes in the stud plate which lead to deeper channels on the opposite side of the stud plate.

The holes and the channels are together described in this application as "openings". Thus, the openings as a whole are tapered, having a wide end and a narrow end, wherein the narrow end of the openings are for receiving the capsule contents. The narrow ends define the holes 213. These holes 213 for example each lead to a conical void which tapers outwardly from the cone tip, which is the narrow end, to the cone base, which is the wide end. This conical void defines one tapered channel.

Of course, any suitable stud plate design may be used, which enables perforation of the capsule cover on one side and provides a flow path on the other side for the pressurized jets which result.

As shown in both Figures 1 and 2, behind the stud plate 210, a fluid collector is provided, comprising a collector chamber 204 for receiving the brewed coffee provided by the holes in the stud plate 210. In the collector chamber 204, in a rear wall 230 defines an upstanding collector wall opposite to the stud plate 210.

In this example, the collector chamber 204 is delimited by the stud plate 210 at a first side and by the rear wall 230 at a second side, opposite to the first side.

In this example, the stud plate 210 and the rear wall 230 are provided parallel to one another, the rear wall 230 may be shaped or oriented differently relative to the stud plate 210. The stud plate 210 and the rear wall 230 are in this example connected by a circumferential wall. The collector chamber 204, with the stud plate 210, the rear wall 230, the circumferential wall and the first fluid channel 220 are comprised by a collector module 200.

The rear wall 230 functions as a deflector positioned between the stud plate 210 and the coffee outlet 220. It prevents the jets ejected from the capsule directly passing to the coffee outlet.

The interaction between the capsule cover (e.g. foil) and the stud plate results in a certain back pressure. A pump used to generate the flow needs to overcome that back pressure and when the parameters of the cover, coffee and pump are chosen correctly, good control over the brewing conditions is possible.

A fine crema is desired. However, it can arise that the crema generating behavior is disturbed resulting in large volumes of coarse crema, which does not look appealing to the user.

Investigations have showed that the exit flows from the stud plate sometimes generate strong jets which, when they impact the outflowing coffee, generate large bubbles that flow into the cup and cause the coarse crema.

This is because the coffee is released from the capsule as jets from the openings in the stud plate (the jets are shown as arrows in Figure 2). The jets strike the rear wall 230 and the coffee then runs down to the opening 206. This coffee flow to the opening 206 is shown as flow arrows 240.

The jets originating from the stud plate can impact the coffee flow 240 behind the stud plate. When some or all of these jets are too strong, large bubbles are created. This is especially the case when strong jets are situated in the lower half of the chamber (since the coffee flow has then accumulated).

The jets are generated at the transition between the cover and the holes in the stud plate. They are for example generated by burrs on the stud plate which interact with the cover foil of the capsule. These burrs are difficult to prevent from occurring since they are very common in plastic molded parts such as the stud plate. High flow jets can also occur due to blocking of some of the stud plate holes or due to the capsule cover closing some, but not all, of the stud plate holes.

Thus, it is difficult to prevent undesirable high flow rate jets which may then result in brews with a coarse crema.

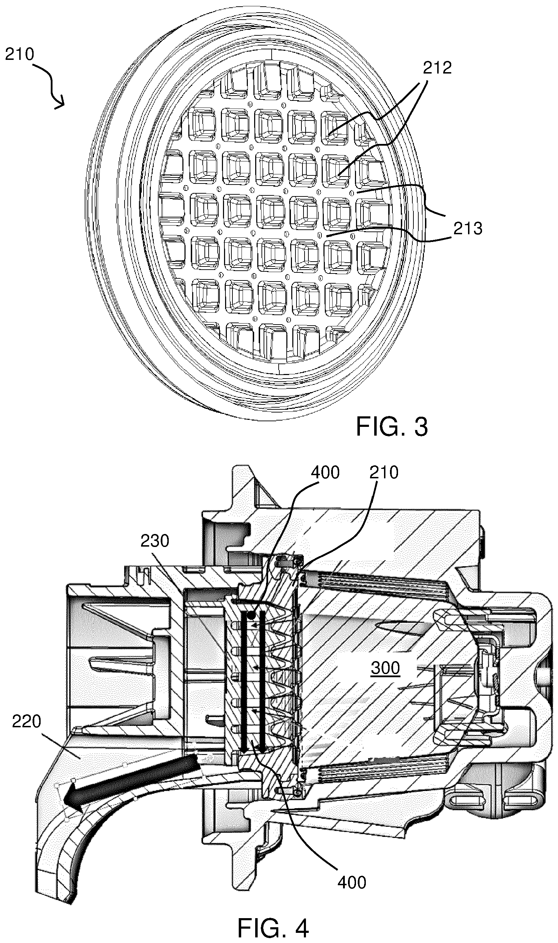

For completeness, Figure 3 shows the appearance of the stud plate viewed from the side which contacts the capsule and shows the studs 212 that are pressed into the foil.

Figure 4 shows a first example of a modification to the apparatus of Figure 2.

A jet shaping unit 400 is added downstream of the stud plate 210, comprising a set of jet shaping elements each associated with a respective one of the openings of the stud plate. In this design, the stud plate 210 can have the same design as shown in Figure 3.

In the example of Figure 4, the jet shaping elements each comprise a projection which projects towards the respective opening of the stud plate.

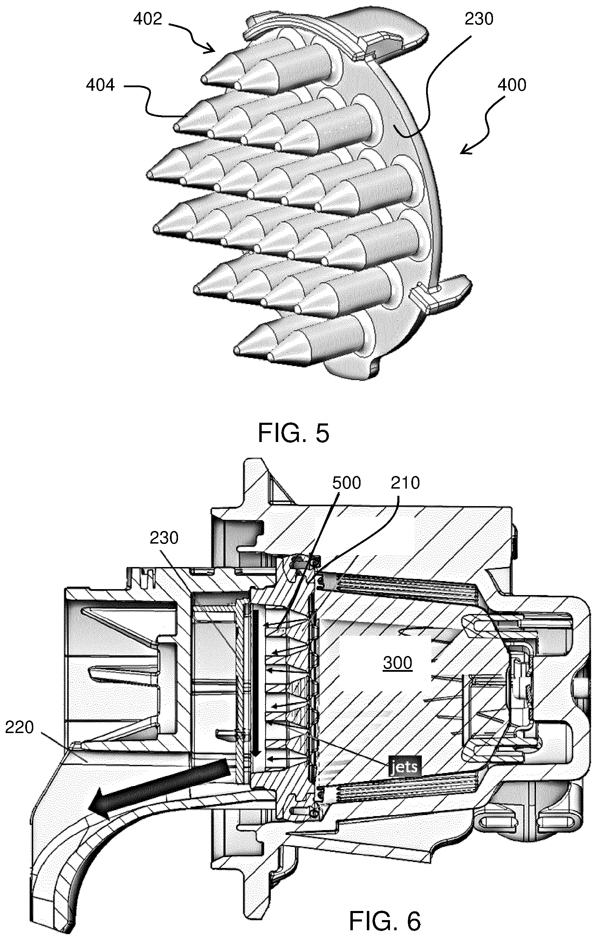

Figure 5 shows the design of the jet shaping unit 400 in more detail, and in particular formed as an integral unit with the rear wall 230. A set of projections 402 extends from the rear wall 230. The projections 402 have conical ends 404 which project into tapered openings (i.e. the conical void parts) of the stud plate 210.

The tapered openings of the stud plate 210 have a wide end and a narrow end. The narrow ends are adjacent the capsule cover 302. The tips of the conical ends 404 thus face the narrow ends of the openings in the vicinity of the cover 302.

The emitting jet from an opening in the stud plate thus impinges on the conical end 404 of a respective one of the projections. The flow is then directed into an annular passageway between the conical void of the stud plate opening and the conical ends 404. This removes energy from the flow and thus reduces the flow velocity. The coffee runs down and around the projections or else runs down the rear wall 230 if the coffee reaches the rear wall.

The projections for example have a length in the range 3mm to 10mm and a diameter in the range 2mm to 6mm. The diameter of the overall structure, i.e. the capsule diameter, is for example in the range 20mm to 50mm.

Figure 6 shows a second example of a modification to the apparatus of Figure 2.

A jet shaping unit 500 is again added downstream of the stud plate 210, comprising a set of jet shaping elements each associated with a respective one of the openings of the stud plate.

In the example of Figure 6, the jet shaping elements each comprise an opening which faces a respective opening of the stud plate.

The emitting jet from an opening in the stud plate thus impinges on the inner surface of an orifice 502 unless the flow is directed aligned with the orifice axis. Energy is again removed from the flow and thus the overall flow velocity is reduced before the coffee reaches the rear wall, or reaches the flow of coffee down the rear wall to the opening 206.

The plate is for example 2 to 6mm thick and the diameter of the orifices is for example in the range 2 to 3mm.

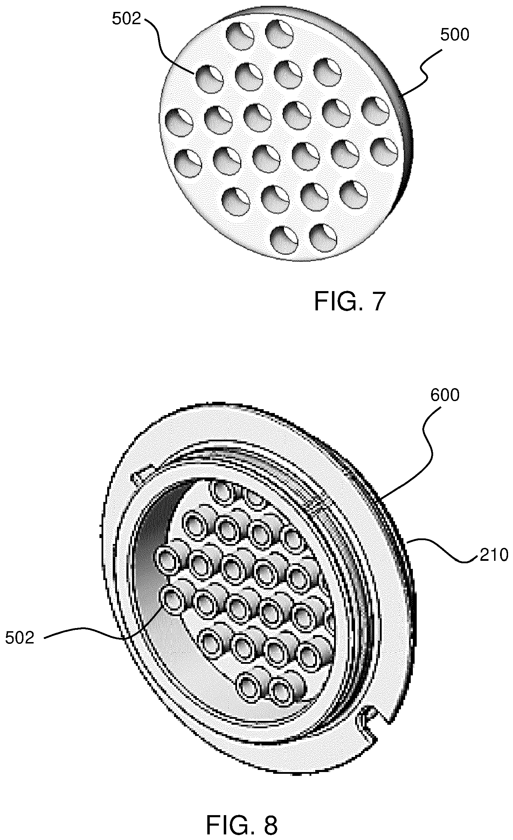

Figure 7 shows the design of the jet shaping unit 500 in more detail. It comprises an orifice plate having orifices 502 which are aligned with the stud plate.

Figure 8 shows that the jet shaping unit may be formed as an integral unit with the stud plate 210.

On a front side which faces the capsule, the narrow ends of the stud plate openings are formed. This has the same design as in Figure 3.

The orifices 502 are formed as cylindrical extensions to the wide ends (i.e. the bases) of the (e.g. conical) stud plate openings. The jet shaping unit thus elongates the outlet geometry of the stud plate by adding a cylindrical part to the conical outlet. This elongation allows the jets, which can exit in all different directions, to impact the internal walls of the cylinder. There the fluid sticks to the walls, spreads out and reduces in velocity.

Either design may be integrated with the stud plate or with the rear wall.

The examples above show a stud plate with 24 openings, and a jet shaping unit with 24 elements (orifices or projections). Of course, this is only an example and there may be more or fewer jet shaping elements, for example between 10 and 50 and more or fewer openings, for example between 10 and 100. Furthermore, there may be a different number of openings to the number of elements of the jet shaping unit, for example fewer jet shaping elements than openings. Thus, each jet shaping element is associated with a respective set of more than one of the openings of the stud plate.

The invention is of primary interest for a coffee machine, and hence for a capsule containing coffee. However, the invention may be applied to a capsule containing another beverage or ingredient. One example of coffee machine has been provided, but this is only by way of example. Many other capsule based coffee machine designs are known and possible to which the invention may be applied. The invention relates specifically to the way coffee (and crema) flow exiting the capsule is processed before delivery to a coffee outlet. Different capsule designs, capsule loading and piercing arrangements (if indeed piercing is needed) and flow arrangements are of course possible.

Variations to the disclosed embodiments can be understood and effected by those skilled in the art in practicing the claimed invention, as defined in the claims, from a study of the drawings, the disclosure and the appended claims. In the claims, the word "comprising" does not exclude other elements or steps, and the indefinite article "a" or "an" does not exclude a plurality. Any reference signs in the claims should not be construed as limiting the scope.

## Claims

1. An apparatus for releasing an ingredient from a capsule, comprising:
a chamber (108) for receiving a capsule (300), the capsule having a top cover (302);
a stud plate (210) comprising a set of openings (213) for receiving the capsule contents as pressurized jets through the top cover, after rupture of the top cover, wherein the openings are tapered, having a wide end and a narrow end, wherein the narrow ends of the openings are for receiving the capsule contents;
an outlet (220) for delivery of the capsule contents;
a deflector (230) positioned between the stud plate (210) and the outlet, comprising an upstanding collector wall; **characterised in that** it further comprises
a jet shaping unit (400;500;600) downstream of the stud plate, comprising a set of one or more jet shaping elements, each jet shaping element associated with a respective set of one or more of the openings of the stud plate, wherein the jet shaping elements are adapted to reduce the flow velocity towards the deflector (230).

2. The apparatus of claim 1, comprising a fluid collector behind the stud plate, comprising a collector chamber (204) for receiving the brewed coffee from the openings in the stud plate (210), wherein the deflector (230) comprises a rear wall of the collector chamber (204) opposite to the stud plate (210) such that the collector chamber (204) is delimited by the stud plate (210) at a first side and by the rear wall (230) at a second side, opposite to the first side.

3. An apparatus as claimed in any one of claims 1 to 2, wherein the jet shaping unit is integrated with the stud plate.

4. An apparatus as claimed in any one of claim 1, wherein the jet shaping unit is integrated with the deflector plate.

5. An apparatus as claimed in any one of claims 1 to 4, wherein the jet shaping elements each comprise a projection which projects towards a respective opening of the stud plate.

6. An apparatus as claimed in claim 5, wherein the openings of the stud plate are conical and the projections have conical ends which project into the tapered openings.

7. An apparatus as claimed in any one of claims 1 to 4, wherein the jet shaping elements each comprise an orifice of an orifice array, with the orifices aligned with the openings.

8. A capsule-based espresso coffee machine comprising:
a water reservoir;
a pressurizing system; and
an apparatus as claimed in any one of claims 1 to 7, for releasing the contents of the capsule under pressure, wherein the outlet of the apparatus defines or is coupled to an outlet of the coffee machine.

## Patentansprüche

1. Vorrichtung zum Freisetzen eines Inhaltsstoffes aus einer Kapsel, umfassend: eine Kammer (108) zum Aufnehmen einer Kapsel (300), wobei die Kapsel eine obere Abdeckung (302) aufweist; eine Stiftplatte (210), die einen Satz von Öffnungen (213) zum Aufnehmen des Kapselinhalts als Druckstrahlen durch die obere Abdeckung nach dem Aufreißen der oberen Abdeckung aufweist, wobei die Öffnungen sich verjüngen und ein breites Ende und ein schmales Ende aufweisen, wobei die schmalen Enden der Öffnungen zum Aufnehmen des Kapselinhalts dienen; einen Auslass (220) zum Ausgeben des Kapselinhalts; eine Ablenkeinrichtung (230), die zwischen der Stiftplatte (210) und dem Auslass positioniert ist und eine aufrecht stehende Sammelwand umfasst; **dadurch gekennzeichnet, dass** sie ferner umfasst: eine Strahlformungseinheit (400;500;600) stromabwärts der Stiftplatte, die einen Satz von einem oder mehreren Strahlformungselementen umfasst, wobei jedes Strahlformungselement mit einem jeweiligen Satz von einer oder mehreren der Öffnungen der Stiftplatte verbunden ist, wobei die Strahlformungselemente angepasst sind, um die Strömungsgeschwindigkeit in Richtung der Ablenkeinrichtung (230) zu reduzieren.

2. Vorrichtung nach Anspruch 1, die einen Flüssigkeitssammler hinter der Stiftplatte umfasst, der eine Sammelkammer (204) zur Aufnahme des gebrühten Kaffees aus den Öffnungen in der Stiftplatte (210) umfasst, wobei die Ablenkeinrichtung (230) eine Rückwand der Sammelkammer (204) gegenüber der Stiftplatte (210) umfasst, so dass die Sammelkammer (204) an einer ersten Seite durch die Stiftplatte (210) und an einer zweiten Seite gegenüber der ersten Seite durch die Rückwand (230) begrenzt wird.

3. Vorrichtung nach einem der Ansprüche 1 bis 2, wobei die Strahlformungseinheit in die Stiftplatte integriert ist.

4. Vorrichtung nach einem der Ansprüche 1, wobei die Strahlformungseinheit in die Ablenkplatte integriert ist.

5. Vorrichtung nach einem der Ansprüche 1 bis 4, wobei die Strahlformungselemente jeweils einen Vorsprung aufweisen, der in Richtung einer entsprechenden Öffnung der Stiftplatte vorsteht.

6. Vorrichtung nach Anspruch 5, wobei die Öffnungen der Stiftplatte konisch sind und die Vorsprünge konische Enden haben, die in die konischen Öffnungen hineinragen.

7. Vorrichtung nach einem der Ansprüche 1 bis 4, wobei die Strahlformungselemente jeweils einen Durchgang einer Anordnung von Durchgängen umfassen, wobei die Durchgänge mit den Öffnungen ausgerichtet sind.

8. Espresso-Kaffeemaschine auf Kapselbasis, umfassend:
einen Wassertank;
ein Drucksystem; und
eine Vorrichtung nach einem der Ansprüche 1 bis 7, um den Inhalt der Kapsel unter Druck freizugeben, wobei der Auslass der Vorrichtung einen Auslass der Kaffeemaschine definiert oder mit diesem verbunden ist.

## Revendications

1. Appareil permettant de libérer un ingrédient d'une capsule, comprenant:
une chambre (108) destinée à recevoir une capsule (300), la capsule ayant un couvercle supérieur (302); une plaque d'appui (210) comprenant un ensemble d'ouvertures (213) pour recevoir le contenu de la capsule sous forme de jets sous pression à travers le couvercle supérieur, après la rupture du couvercle supérieur, les ouvertures étant effilées, avec une extrémité large et une extrémité étroite, les extrémités étroites des ouvertures étant destinées à recevoir le contenu de la capsule; une sortie (220) pour l'évacuation du contenu de la capsule; un déflecteur (230) placé entre la plaque d'appui (210) et la sortie, comprenant une paroi collectrice verticale; **caractérisé en ce qu'**il comprend en outre une unité de mise en forme du jet (400;500;600) en aval de la plaque d'appui, comprenant un ensemble d'un ou plusieurs éléments de mise en forme du jet, chaque élément de mise en forme du jet étant associé à un ensemble respectif d'une ou plusieurs ouvertures de la plaque d'appui, les éléments de mise en forme du jet étant adaptés pour réduire la vitesse d'écoulement vers le déflecteur (230).

2. L'appareil de la revendication 1, comprenant un collecteur de fluide derrière la plaque d'appui, comprenant une chambre de collecte (204) pour recevoir le café infusé à partir des ouvertures de la plaque d'appui (210), dans laquelle le déflecteur (230) comprend une paroi arrière de la chambre de collecte (204) opposée à la plaque d'appui (210) de sorte que la chambre de collecte (204) est délimitée par la plaque d'appui (210) d'un premier côté et par la paroi arrière (230) d'un second côté, opposé au premier côté.

3. Appareil selon l'une des revendications 1 à 2, dans lequel l'unité de mise en forme du jet est intégrée à la plaque d'appui.

4. Appareil selon l'une des revendications 1, dans lequel l'unité de mise en forme du jet est intégrée à la plaque déflectrice.

5. Appareil selon l'une des revendications 1 à 4, dans lequel les éléments de mise en forme du jet comprennent chacun une projection qui fait saillie vers une ouverture respective de la plaque d'appui.

6. Appareil selon la revendication 5, dans lequel les ouvertures de la plaque d'appui sont coniques et les projections ont des extrémités coniques qui font saillie dans les ouvertures coniques.

7. Appareil selon l'une des revendications 1 à 4, dans lequel les éléments de mise en forme du jet comprennent chacun un orifice d'un réseau d'orifices, les orifices étant alignés avec les ouvertures.

8. Machine à café expresse à base de capsules comprenant:
un réservoir d'eau;
un système de pressurisation; et
un appareil tel que décrit dans l'une des revendications 1 à 7, permettant de libérer le contenu de la capsule sous pression, dans lequel la sortie de l'appareil définit ou est couplée à une sortie de la machine à café.
